# EUROPÄISCHE PATENTANMELDUNG

(11) **EP 2 808 275 A1**
(43) Veröffentlichungstag der Anmeldung: **03.12.2014**
(21) Anmeldenummer: 14163138.2
(22) Anmeldetag: 02.04.2014
(51) Int. Cl.: B65G 47/32, B65G 47/53, B65G 15/14, B65G 47/31

(54) **Transportvorrichtung und Verfahren zum Umlenken von Behältern aus einer ersten in eine zweite Transportrichtung**

(30) Priorität: 22.05.2013 DE 102013209451
(71) Anmelder: Krones AG, 93073 Neutraubling (DE)
(72) Erfinder: Gut, Thorsten, 93073 Neutraubling (DE)
(74) Vertreter: Grünecker, Kinkeldey, Stockmair & Schwanhäusser

(57) **Zusammenfassung**

Die Erfindung betrifft eine Transportvorrichtung, die einen linearen Riemenförderer, der eine erste Riemenstation (13) und eine zweite Riemenstation (18) umfasst, zum bodenfreien Transport von Behältern (2-12) in einem Kanal (24) umfasst, der zwischen der ersten Riemenstation (13) und der zweiten Riemenstation (18) ausgebildet ist und vorzugsweise geradlinig verläuft, wobei ein Einlauf in den linearen Riemenförderer als Umlenkeinheit ausgebildet ist, um die Behälter aus einer ersten Transportrichtung (T1) in eine zweite Transportrichtung (T2) umzulenken.

## Beschreibung

Die Erfindung betrifft eine Inspektionsmaschine für Behälter, wie etwa Flaschen, Dosen, Gläser mit oder ohne Schraubverschluss, gemäß des Oberbegriffs des Anspruchs 1 und ein Verfahren zum Umlenken von Behältern, wie etwa Flaschen, Dosen, Gläser mit oder ohne Schraubverschluss, vorzugsweise eines Behälterstroms, aus einer ersten Transportrichtung in eine zweite Transportrichtung gemäß des Oberbegriffs des Anspruchs 17.

### Stand der Technik

Es ist bekannt, Flaschen in einer Behandlungsmaschine, wie beispielsweise einer Gefäßinspektionsmaschine, mittels seitlich angreifender Riemen von Riemenstationen zu transportieren. Für ein bodenfreies Transportieren von Flaschen in Inspektionsmaschinen oder anderen Gefäßbehandlungsmaschinen werden die Riemen durch eine paarweise gegenüberliegende Anordnung zur Bildung eines Flaschenförderkanals verwendet. Ihr gegenseitiger Zwischenabstand ist zumindest geringfügig kleiner gewählt als der Außendurchmesser der Flaschen. Dadurch können die Flaschen in dem von den Riemenstationen gebildeten Flaschenkanal seitlich zwischen den elastischen Riemen eingeklemmt und dann reibschlüssig transportiert werden.

Im Allgemeinen werden symmetrische Riemenstationen für eine bodenfreie Inspektion verwendet, in welche die Flaschen gerade einlaufen müssen, d.h. die Förderrichtung eines Zuförderers und die Transportrichtung in der Riemenstation müssen in die gleiche Richtung weisen. D.h., es ist beispielsweise nicht möglich, eine direkte 90°-Aufstellung vorzusehen, bei der Einlauf zu der Riemenstation und die Riemenstation in einem 90°-Winkel zueinander angeordnet sind. Um einen 90°-Winkel zu ermöglichen, wird beispielsweise im Einlauf ein Eckeinteilstern vorgesehen, der mit Flaschendruck, d.h. ohne Lücke im Flaschenstrom, gefüllt wird. Bei Verwendung eines Eckeinteilsterns ist vor der Riemenstation aber trotzdem eine zusätzliche gerade Zuführung von mindestens 60 cm vorzusehen. Bevor die Flaschen in dem Flaschenkanal inspiziert werden können, ist noch eine Beabstandung zwischen den Flaschen vorzusehen, wodurch eine weitere gerade Strecke von mindestens 140 cm vor der Riemenstation erforderlich ist.

DE 37 11 605 A1 offenbart eine Vorrichtung zum Steuern eines Transportweges von Gegenständen, die auf einem ersten Transportband zugeführt und von Ablenkelementen auf ein oder mehrere parallel nebeneinander angeordnete Transportbänder abgelenkt werden, die mit dem ersten Transportband einen Winkel von 30° bis 60° bilden. Das erste Transportband verläuft schräg über die anderen Transportbänder und liegt auf diesen auf, so dass die Gegenstände ohne Gefahr des Umkippens vom ersten Transportband auf eines der anderen Transportbänder gleiten können.

DE 102 36 496 A1 offenbart eine Übergabevorrichtung, die um die quer zur Zuführrichtung des Gutes liegende Achse gedreht werden kann und eine Transporteinheit umfasst. Das in der Aufnahme befindliche Gut kann somit bereits dann weiter transportiert werden, wenn die Übergabevorrichtung noch dreht und das Gut seine zweite Lage noch nicht erreicht hat.

EP 0 124 164 B1 offenbart eine Vorrichtung zum Überprüfen von Behältern, in der eine Ablenkung aus einer geraden Transportrichtung mittels einer um eine Achse drehbaren Platte und gebogenen Führungsvorrichtungen in die entgegengesetzte Transportrichtung umgelenkt werden.

EP 0 415 154 A1 umfasst die Verwendung von Rotationsmitteln zum Drehen von Gegenständen um eine Rotationsachse des Gegenstands. Die Rotationsmittel umfassen mindestens ein Paar von zwei endlosen Förderanlagen, die jeden Gegenstand an beiden Seiten seiner Rotationsachse angreifen, wobei die zwei Förderanlagen mit unterschiedlichen Geschwindigkeiten betrieben werden, so dass es zu einer Drehung der Gegenstände kommt.

WO 99/23480 offenbart einen zumindest teilweise bogenförmig verlaufenden Zwischenförderer, der mindestens zwei an gegenüberliegenden Seiten der Gefäße angreifende, mit der gleichen Geschwindigkeit antreibbare endlose Fördermittel aufweist, welche die Gefäße ohne Drehung von einem Zuförderer auf einen Abförderer überführt. Der Zuförderer und der Abförderer verlaufen winkelförmig zueinander, so dass eine erste Seiteninspektionsvorrichtung des Zuförderers andere Seiten der Gefäße inspizieren kann als eine zweite Seiteninspektionsvorrichtung des Abförderers.

### Aufgabe der Erfindung

Der Erfindung liegt die Aufgabe zugrunde, einen Riemenförderer mit Riemenstationen zur Verfügung zu stellen, in welche Behälter nicht gerade einlaufen müssen, d.h. dass die Förderrichtung eines Zuförderers und die Transportrichtung im Kanal, der sich zwischen den Riemenstationen befindet, nicht in die gleiche Richtung weisen müssen. Durch die Erfindung wird eine Platzersparnis in Längsrichtung erreicht, da sich bei einer Behälterinspektion, bei der die Behälter entlang einer geraden Strecke transportiert werden müssen, im Allgemeinen Baulängen von 7 m oder 8 m ergeben.

### Lösung

Die Aufgabe wird erfindungsgemäß durch die Inspektionsmaschine nach Anspruch 1 und gemäß dem Verfahren nach Anspruch 17 gelöst. Bevorzugte Ausführungsformen sind in den Unteransprüchen offenbart.

Im Rahmen der vorliegenden Erfindung sind unter dem Begriff "Behälter" alle für die Aufnahme von beliebigen Produkten wie z.B. Getränken, Lebensmittel, Arzneimittel usw. geeignete Behältnisse wie Flaschen, Dosen, Gläser mit und ohne Schraubverschluss usw. zu verstehen, die vorzugsweise einen zumindest näherungsweise runden Querschnitt aufweisen. Nachfolgend wird aus Gründen der Vereinfachung lediglich von Behältern gesprochen.

Im Rahmen der vorliegenden Erfindung umfasst eine Inspektionsmaschine einen linearen Riemenförderer, der eine erste Riemenstation und eine zweite Riemenstation umfasst, zum bodenfreien Transport von Behältern, wie etwa Flaschen, Dosen, Gläsern mit oder ohne Schraubverschluss, in einem Kanal, der zwischen der ersten Riemenstation und der zweiten Riemenstation ausgebildet ist und vorzugsweise geradlinig verläuft, wobei ein Einlauf in den linearen Riemenförderer als Umlenkeinheit ausgebildet ist, um die Behälter aus einer ersten Transportrichtung in eine zweite Transportrichtung umzulenken.

Da ein Umlenken der Behälter erfolgt, sind die erste und die zweite Transportrichtung verschieden. Dadurch, dass die Transportrichtung beispielsweise eines Zuförderers und die Transportrichtung in dem Kanal, der sich zwischen der ersten und der zweiten Riemenstationen befindet, nicht in die gleiche Richtung weisen müssen, ergibt sich eine Platzersparnis in Längsrichtung der Inspektionsmaschine.

Die Inspektionsmaschine kann weiter eine dem linearen Riemenförderer nachfolgende Seitenwandinspektionsvorrichtung umfassen. Somit kann durch den bodenfreien Transport im Kanal zwischen der ersten Riemenstation und der zweiten Riemenstation zuerst der Boden von Behältern und im Anschluss die Seitenwände von Behältern untersucht werden.

Die Inspektionsmaschine kann weiter eine dem linearen Riemenförderer vorgeschaltete Sortiervorrichtung zum Erkennen und Ausscheiden von Behältern, die von einer vorgegebenen Spezifikation abweichen, umfassen. Durch die Sortiervorrichtung ist es möglich, Behälter vor dem Einlauf des linearen Riemenförderers auszusortieren, wenn Behälter beispielsweise nicht einem gewünschten Typ entsprechen oder Schäden aufweisen, die von der Sortiervorrichtung erkannt werden können. Durch das vorherige Aussortieren kann somit ein überflüssiges Inspizieren von solchen Behältern in dem linearen Riemenförderer vermieden werden. Die Inspektionsmaschine kann weiter einen ersten Transporteur umfassen, der dazu ausgelegt ist, die Behälter mit einer Transportgeschwindigkeit in die erste Transportrichtung zu transportieren.

Die Inspektionsmaschine ermöglicht somit eine Inspektion von Behältern in dem Kanal, der durch die beiden Riemenstationen gebildet wird, wobei Behälter beispielsweise von einem ersten Transporteur mit einer ersten Transportrichtung zu der ersten und der zweiten Riemenstationen transportiert werden können, es aber nicht erforderlich ist, dass die erste Transportrichtung des ersten Transporteurs mit der zweiten Transportrichtung in dem Kanal übereinstimmt.

Vorzugsweise ist der Kanal über seine gesamte Länge geradlinig ausgebildet. Als Länge des Kanals kann die Strecke angesehen werden, entlang der ein reibschlüssiger Transport der Behälter möglich ist, d.h. entlang dieser Strecke sind die erste und die zweite Riemenstation einander gegenüberliegend angeordnet.

Da die erste Transportrichtung und die zweite Transportrichtung verschieden sind, sind die erste und die zweite Riemenstation vorzugsweise einander zumindest teilweise gegenüberliegend derart angeordnet, dass sie in einem Bereich, in dem die Behälter nicht geradlinig aus dem Kanal heraustransportiert bzw. nicht geradlinig in den Kanal hineintransportiert werden, zu einander versetzt angeordnet sind. Beispielsweise kann vorgesehen sein, dass der erste Transporteur mit seiner gesamten Breite in dem Bereich unter einen Teil der zweiten Riemenstation läuft, während der erste Transporteur in dem Bereich nur mit seinem Seitenbereich unter einem Teil der ersten Riemenstation läuft.

Zwischen der ersten Transportrichtung und der zweiten Transportrichtung kann ein Winkel zwischen 20° bis 90° bestehen. Durch diese Variabilität in der Ausrichtung zwischen der ersten und der zweiten Transportrichtung, kann die Inspektionsvorrichtung so vorgesehen werden, dass sie optimal zu gegebenen Örtlichkeiten beispielsweise in einer Produktionshalle ausgeführt werden kann. Dadurch kann vermieden werden, dass zusätzlich zu der erforderlichen geraden Strecke des Kanals eine gerade, in die gleiche Richtung ausgerichtete Zuführung für die Behälter zu dem Kanal erforderlich ist. Durch die Inspektionsmaschine ist eine platzsparendere Anordnung möglich.

Die Inspektionsmaschine kann weiter einen Gummiriemen umfassen, der dazu ausgelegt ist, durch eine federnde Wirkung des Gummiriemens die Behälter, die gegen den Gummiriemen transportiert werden, gegen eine erste Antriebsrolle der ersten Riemenstation zu drücken und so reibschlüssig mittels eines ersten Riemens der ersten Riemenstation und des Gummiriemens in den Kanal oder aus dem Kanal zu transportieren, wobei der Gummiriemen in einem Winkel von 30° bis 60° zu der zweiten Transportrichtung an einer zweiten Antriebsrolle der zweiten Riemenstation angeordnet ist. Der erste Riemen wird von der ersten Riemenstation umfasst und kann mittels einer ersten Antriebsrolle angetrieben und mittels einer ersten Umlenkrolle umgelenkt werden. Die Verwendung des Ausdrucks "erster" Riemen, "erste" Antriebsrolle, "erste" Umlenkrolle dient für eine Zuordnung dieser Elemente zu der ersten Riemenstation. Die erste Riemenstation kann auch mehr als einen Riemen umfassen, wobei die mehreren Riemen dann vorzugsweise gemeinsam von der ersten Antriebsrolle angetrieben und von der ersten Umlenkrolle umgelenkt werden. Die zweite Antriebsrolle wird von der zweiten Riemenstation umfasst, wobei der zweite Riemen der zweiten Riemenstation von der zweiten Antriebsrolle angetrieben und von der zweiten Umlenkrolle umgelenkt werden kann. Die Verwendung des Ausdrucks "zweiter" Riemen, "zweite" Antriebsrolle, "zweite" Umlenkrolle dient für eine Zuordnung dieser Elemente zu der zweiten Riemenstation. Die zweite Riemenstation kann auch mehr als einen Riemen umfassen, wobei die mehreren Riemen dann vorzugsweise gemeinsam von der zweiten Antriebsrolle angetrieben und von der zweiten Umlenkrolle umgelenkt werden.

Der Gummiriementeil, der in Kontakt mit den Behältern kommen kann, bildet mit der zweiten Transportrichtung in einem unbelasteten Zustand, d.h., wenn keine Behälter auf diesen Gummiriementeil einwirken, einen Winkel von 30° bis 60°. Durch die federnde Wirkung des Gummiriemens werden die Behälter, die beispielsweise von dem ersten Transporteur auf dem Weg zu dem Kanal gegen den Gummiriemen transportiert werden, gegen die erste Antriebsrolle der ersten Riemenstation gedrückt und so durch den Gummiriemen und den ersten Riemen der ersten Riemenstation um den Winkel gezogen, den die erste Transportrichtung und die zweite Transportrichtung zueinander aufweisen, und gelangen in den Kanal, wo die Behälter durch den ersten Riemen und den zweiten Riemen reibschlüssig gehalten und transportiert werden können.

Werden die Behälter in dem Kanal in die zweite Transportrichtung transportiert und danach durch den ersten Transporteur in die erste Transportrichtung transportiert, so können die Behälter, die durch die geradlinig verlaufenden ersten und zweiten Riemen reibschlüssig transportiert werden, nach Verlassen des Kanals durch die federnde Wirkung des Gummiriemens sanft in die erste Transportrichtung umgelenkt werden.

Die erste Antriebsrolle kann den ersten Riemen mit einer ersten Geschwindigkeit und die zweite Antriebsrolle kann den zweiten Riemen mit einer zweiten Geschwindigkeit antreiben, wobei die erste und die zweite Geschwindigkeit in dem Kanal gleichsinnig in die zweite Transportrichtung gerichtet sind und somit die Behälter mittels des ersten und des zweiten Riemens in die zweite Transportrichtung bewegt werden können.

Die zweite Antriebsrolle der zweiten Riemenstation kann weiter dazu ausgelegt sein, den Gummiriemen anzutreiben. Somit weisen der Gummiriemen und der zweiten Riemen der zweiten Riemenstation gleiche Geschwindigkeiten auf, wenn sie durch die zweite Antriebsrolle angetrieben werden.

Alternativ kann die Inspektionsmaschine einen Antrieb umfassen, der dazu ausgelegt ist, den Gummiriemen anzutreiben. Wenn der Gummiriemen über einen eigenen Antrieb angetrieben wird, ist es möglich, für den Gummiriemen und den zweiten Riemen der zweiten Riemenstation unterschiedliche Geschwindigkeiten zu wählen bzw. zu verwenden; es ist auch möglich gleiche Geschwindigkeiten zu wählen bzw. zu verwenden. So kann beispielsweise eine gezielte, gradgenaue vorgegebene Drehung des Behälters erreicht werden. Notwendig wird das bei einer Seitenwandinspektion mittels einzelner, gerader Durchsicht der Behälterwand im Maschineneinlauf und einer Inspektion mittels mehrerer Kameras oder Spiegelkabinett im Maschinenauslauf d.h. nach dem Riementransport. So ist es möglich einerseits im Maschineneinlauf einen geschlossenen Produktstrom zu verarbeiten und andererseits eine vollständige Seitenwandinspektion des Behälters zu erreichen.

Wenn die erste Riemenstation und die zweite Riemenstation einander zumindest teilweise gegenüberliegend angeordnet sind, können Behälter durch den ersten Transporteur in der ersten Transportrichtung an der ersten Antriebsrolle vorbei auf die zweite Antriebsrolle zu transportiert werden. Die Behälter werden somit über den Radius der ersten Antriebsrolle abgewickelt und kommen dann in Kontakt mit dem zweiten Riemen der zweiten Riemenstation oder mit dem Gummiriemen, so dass die Behälter durch den ersten Riemen und den zweiten Riemen bzw. den Gummiriemen in den Kanal gelangen und dort reibschlüssig von dem ersten und dem zweiten Riemen transportiert werden können.

Im Allgemeinen werden vor einer Inspektionsmaschine die Behälter in einem sogenannten Behälterstrom, d.h. ohne größeren Abstand zwischen den einzelnen Behältern, transportiert, wohingegen für die Inspektion eine Beabstandung zwischen den einzelnen Behältern erforderlich ist, insbesondere zur Seitenwandinspektion die mit üblicherweise zwei oder mehr Ansichten der Behälterwand arbeitet. Mittels der Inspektionsmaschine kann eine Beabstandung der Behälter in dem Kanal zur Verfügung gestellt werden, wenn die erste Geschwindigkeit des ersten Riemens und die zweite Geschwindigkeit des zweiten Riemens bzw. die Geschwindigkeit des Gummiriemens größer ist als die Transportgeschwindigkeit des ersten Transporteurs. In diesem Fall werden die Behälter durch den ersten Riemen und den zweiten Riemen bzw. den Gummiriemen schneller wegtransportiert als sie durch den ersten Transporteur herantransportiert werden, so dass der Abstand zwischen den Behältern vergrößert wird.

Die Inspektionsmaschine arbeitet vorzugsweise in einem Leistungsbereich von etwa 25000 bis zu etwa 30000 Behältern/h je nach Einlaufwinkel in die Inspektionsmaschine.

Weiter kann die Inspektionsmaschine einen zweiten Transporteur umfassen, der in der zweiten Transportrichtung angeordnet ist und der dazu ausgelegt ist, die Behälter in die zweite Transportrichtung von dem Kanal weg oder zu dem Kanal hin zu transportieren.

Der zweite Transporteur kann hierbei so angeordnet sein, dass er teilweise unterhalb des Kanals verläuft, so dass eine sichere Übergabe der Behälter von dem zweiten Transporteur an den Kanal oder von dem Kanal an den zweiten Transporteur erfolgen kann. Zudem kann die Inspektionsmaschine ein Überschubblech umfassen, das in der zweiten Transportrichtung zwischen dem ersten Transporteur und dem Kanal angeordnet ist. Das Überschubblech ist vorgesehen, um zu verhindern, dass (a) Behälter, die noch nicht sowohl von dem ersten Riemen wie auch dem zweiten Riemen reibschlüssig aufgenommen wurden, durchfallen oder dass (b) Behälter, die den Kanal verlassen und somit nicht mehr reibschlüssig von dem ersten und dem zweiten Riemen transportiert werden, durchfallen. Das Überschubblech kann so ausgeführt sein, dass eine Inspektion oder eine Bodenabblasung der Behälter möglich ist.

Eine erste Länge eines ersten Riemenanteils des ersten Riemens, der parallel zu der zweiten Transportrichtung ausgerichtet und dazu ausgelegt ist, sich in die zweite Transportrichtung zu bewegen, wenn der erste Riemen von der ersten Antriebsrolle angetrieben wird, kann gleich lang sein wie eine zweite Länge eines zweiten Riemenanteils eines zweiten Riemens der zweiten Riemenstation, der parallel zu der zweiten Transportrichtung ausgerichtet und dazu ausgelegt ist, sich in die zweite Transportrichtung zu bewegen, wenn der zweite Riemen von der zweiten Antriebsrolle angetrieben wird.

In einer anderen Ausführungsform der Inspektionsmaschine kann eine erste Länge eines ersten Riemenanteils des ersten Riemens, der parallel zu der zweiten Transportrichtung ausgerichtet und dazu ausgelegt ist, sich in die zweite Transportrichtung zu bewegen, wenn der erste Riemen von der ersten Antriebsrolle angetrieben wird, kürzer sein als eine zweite Länge eines zweiten Riemenanteils eines zweiten Riemens der zweiten Riemenstation, der parallel zu der zweiten Transportrichtung ausgerichtet und dazu ausgelegt ist, sich in die zweite Transportrichtung zu bewegen, wenn der zweite Riemen von der zweiten Antriebsrolle angetrieben wird.

Zudem können diese erste Länge (d.h. die erste Länge eines ersten Riemenanteils des ersten Riemens, der parallel zu der zweiten Transportrichtung ausgerichtet und dazu ausgelegt ist, sich in die zweite Transportrichtung zu bewegen, wenn der erste Riemen von der ersten Antriebsrolle angetrieben wird) und diese zweite Länge (d.h. die zweite Länge eines zweiten Riemenanteils des zweiten Riemens, der parallel zu der zweiten Transportrichtung ausgerichtet und dazu ausgelegt ist, sich in die zweite Transportrichtung zu bewegen, wenn der zweite Riemen von der zweiten Antriebsrolle angetrieben wird) so bemessen sein, dass die erste Riemenstation und die zweite Riemenstation an einem Ende einander gegenüber liegend enden.

Durch die Variation an unterschiedlich bemessenen Riemenanteilen ist es möglich Inspektionsmaschinen vorzusehen, bei denen Behälter unter einem ersten Winkel in den Kanal eingebracht werden und nach dem Kanal in einem zweiten Winkel weiter transportiert werden.

Die Inspektionsmaschine kann weiter ein Geländer umfassen, das dazu ausgelegt ist, die Behälter auf dem ersten Transporteur zu halten, wenn die Behälter in Kontakt mit der ersten Riemenstation und/oder der zweiten Riemenstation kommen.

Werden beispielsweise die Behälter in einer Inspektionsmaschine ohne zusätzlichen Gummiriemen durch den ersten Transporteur in die erste Transportrichtung auf den Kanal zu transportiert, so ist vorzugsweise in dem Bereich, in dem der erste Transporteur sich der ersten Riemenstation nähert und bis zu einem Bereich in dem der ersten Transporteur unter die zweite Riemenstation läuft, auf der der ersten Riemenstation abgewanden Seite des ersten Transporteurs das Geländer angeordnet. Durch das Geländer werden Behälter, die mit der ersten Riemenstation in Kontakt kommen, auf der anderen Seite mittels des Geländers abgestützt werden, so dass diese Behälter nicht durch Wechselwirkung mit der ersten Riemenstation verschoben und/oder umgekippt werden können. Das Geländer kann sich bis zu der zweiten Riemenstation erstrecken, so dass auch bei Kontakt der Behälter mit der zweiten Riemenstation diese Behälter nicht verschoben und/oder umgekippt werden können. Vorzugsweise ist das Geländer so ausgebildet, dass es oberhalb des Seitenbereichs des ersten Transporteurs angeordnet ist, so dass die Behälter auf dem ersten Transporteur verbleiben und nicht in bzw. über den Seitenbereich des ersten Transporteurs gelangen können.

Werden beispielsweise die Behälter in einer Inspektionsmaschine mit zusätzlichem Gummiriemen durch den ersten Transporteur in die erste Transportrichtung auf den Kanal zu transportiert, so kann das Geländer eine Aussparung aufweisen. Die Aussparung ist vorzugsweise so angeordnet, dass der Gummiriemen betrieben werden kann, ohne mit Teilen des Geländers in Kontakt zu kommen. Die Aussparung ermöglicht somit einen Betrieb des Gummiriemens, wobei zudem Behälter, die mit der ersten Riemenstation in Kontakt kommen, auf der anderen Seite mittels des Geländers abgestützt werden und nicht verschoben und/oder umgekippt werden können.

Weiter kann die Inspektionsmaschine ein Geländer umfassen, das dazu ausgelegt ist, die Behälter auf dem zweiten Transporteur zu halten, wenn die Behälter Kontakt mit der ersten Riemenstation und/oder der zweiten Riemenstation verlassen, beispielsweise, wenn die Behälter in dem Kanal in die zweite Transportrichtung transportiert werden und dann im Anschluss von dem zweiten Transporteur weiter in der zweiten Transportrichtung transportiert werden. Besonders vorteilhaft ist dieses Geländer, wenn die erste Riemenstation und die zweite Riemenstation derart versetzt zueinander angeordnet sind, dass in der zweiten Transportrichtung die erste Riemenstation und die zweite Riemenstation nicht einander gegenüberliegend enden. Auch dieses Geländer ist vorzugsweise so ausgebildet, dass es oberhalb des Seitenbereichs des zweiten Transporteurs angeordnet ist, so dass die Behälter auf dem zweiten Transporteur verbleiben und nicht in bzw. über den Seitenbereich des zweiten Transporteurs gelangen können.

Die erste Riemenstation und/oder die zweite Riemenstation kann mehr als einen Riemen umfassen. Durch das Vorhandensein von mehr als einem Riemen können auch Behälter deren Durchmesser entlang ihrer Längsachse variiert sicher reibschlüssig in dem Kanal transportiert werden, und eine Verkippung der Behälter aus einer senkrechten Lage kann vermieden werden.

Zudem betrifft die Erfindung ein Verfahren zum Umlenken von Behältern, wie etwa Flaschen, Dosen, Gläser mit oder ohne Schraubverschluss, vorzugsweise eines Behälterstroms, aus einer ersten Transportrichtung in eine zweite Transportrichtung unter Verwendung einer erfindungsgemäßen Inspektionsmaschine wie sie oben oder weiter unten beschrieben ist.

Weiterhin umfasst die Inspektionsmaschine einen Abförderer nach der Riemenstation der mit einer höheren Geschwindigkeit als die Inspektionsmaschine betrieben werden kann, um so Behälter für eine nachfolgende Seitenwandinspektion weiter zu beabstanden bzw. auseinanderziehen. Dies ist insbesondere dann notwendig, sollte eine 360° Inspektion der Behälterwand angestrebt werden.

### Kurze Figurenbeschreibung

Weitere Vorteile und Ausführungsformen ergeben sich aus den beigefügten Zeichnungen. Beispielhaft werden in den Zeichnungen Flaschen als Behälter verwendet. In den Zeichnungen zeigt:
- Figur 1: eine Draufsicht einer ersten Ausführungsform einer Inspektionsmaschine;
- Figur 2: eine Draufsicht einer zweiten Ausführungsform einer Inspektionsmaschine;
- Figur 3: eine Draufsicht einer dritten Ausführungsform einer Inspektionsmaschine;
- Figur 4: eine Draufsicht einer vierten Ausführungsform einer Inspektionsmaschine;
- Figur 5: eine Seitenansicht einer Inspektionsmaschine in einem Bereich des Gummiriemens;
- Figur 6: eine Draufsicht einer fünften Ausführungsform einer Inspektionsmaschine; und

darin zeigen
Figuren 7a-7d eine erste Übersicht über verschiedene Inspektionsmaschinen; und
Figuren 8a-8d eine zweite Übersicht über verschiedene Inspektionsmaschinen.

### Ausführliche Figurenbeschreibung

In der Figurenbeschreibung werden der erste bzw. der zweite Transporteur als Einlauftransporteur bzw. Auslauftransporteur beschrieben, je nachdem, ob sie Flaschen zu dem Kanal hin oder Flaschen von dem Kanal weg transportieren.

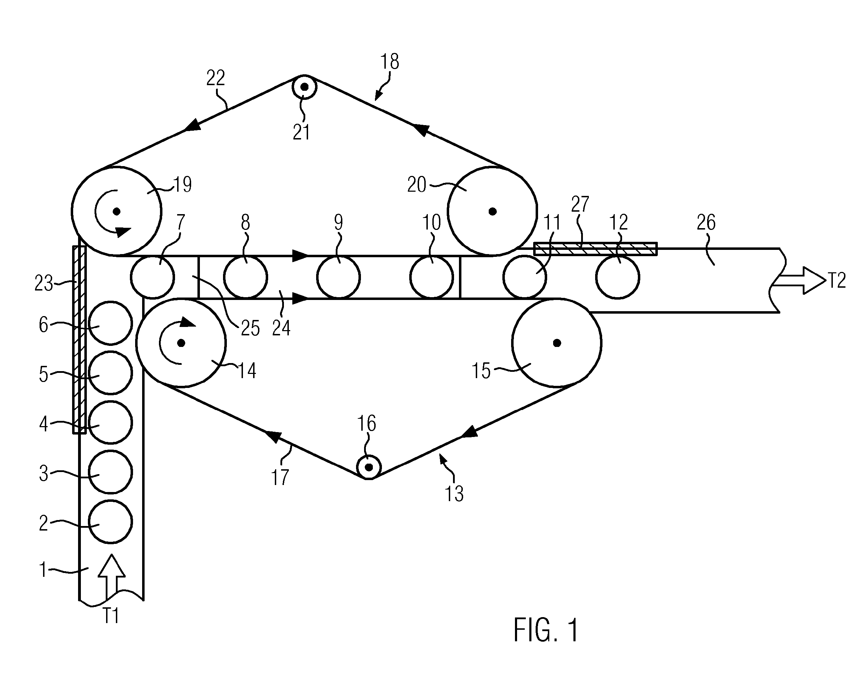

Figur 1 zeigt eine Draufsicht erste Ausführungsform einer Inspektionsmaschine, wobei die erste Transportrichtung T1 und die zweite Transportrichtung T2 verschieden sind. In der zweidimensional dargestellten Draufsicht, weist die erste Transportrichtung T1 nach vorne und die zweite Transportrichtung T2 nach rechts. Somit wird eine Umlenkung der Flaschen 2-12 durch die Inspektionsmaschine um 90° ermöglicht.

Die Inspektionsmaschine umfasst einen Einlauftransporteur 1, der die darauf befindlichen Flaschen 2-6 in die erste Transportrichtung T1 transportiert. Die Flaschen 2-6 weisen hierbei keine größeren Lücken in dem Flaschenstrom auf, und der Flaschenstrom ist zudem vorzugsweise druckfrei.

Für die Ausführung der Umlenkung sind eine erste Riemenstation 13, umfassend eine erste Antriebsrolle 14, eine erste Umlenkrolle 15, eine erste Führungsrolle 16 und einen ersten endlosen Riemen 17, und eine zweite Riemenstation 18, umfassend eine zweite Antriebsrolle 19, eine zweite Umlenkrolle 20, eine zweite Führungsrolle 21 und einen zweiten endlosen Riemen 22, in der Inspektionsmaschine vorgesehen.

Die erste Riemenstation 13 und die zweite Riemenstation 18 sind einander zumindest teilweise gegenüberliegend derart angeordnet sind, dass ein Kanal 24 durch die einander zumindest teilweise gegenüberliegend und beabstandet angeordneten ersten 17 und zweiten Riemen 22 ausgebildet ist. Der Abstand zwischen dem ersten Riemen 17 und dem zweiten Riemen 22 wird entsprechend der Geometrie der Flaschen 2-12 gewählt, so dass der erste Riemen 17 und der zweite Riemen 22 reibschlüssig an den Flaschen 2-12 angreifen und diese in die zweite Transportrichtung T2 transportieren können.

Die jeweiligen Längen des Riemenanteils des ersten Riemens 17 und des zweiten Riemens 22, die parallel zu der zweiten Transportrichtung T2 sind und sich in die zweite Transportrichtung T2 bewegen, wenn der erste Riemen 17 von der ersten Antriebsrolle 14 angetrieben und der zweite Riemen 22 von der zweiten Antriebsrolle 19 angetrieben wird, sind gleich lang.

Durch die versetzte Anordnung der ersten Riemenstation 13 und der zweiten Riemenstation 18 werden die Flaschen 2-12 durch den Einlauftransporteur 1 an der ersten Antriebsrolle 14 der ersten Riemenstation 13 vorbeitransportiert und treffen im Bereich der zweiten Antriebsrolle 19 der zweiten Riemenstation 18 auf den Riemenanteil des zweiten Riemens 22, der parallel zu der zweiten Transportrichtung T2 ist. Der Einlauftransporteur 1, die erste Riemenstation 13 und die zweite Riemenstation 18 sind relativ zueinander so angeordnet, dass der Einlauftransporteur 1 sich zumindest bis unterhalb der zweiten Antriebsrolle 19 der zweiten Riemenstation 18 erstreckt und dass der Einlauftransporteur 1 zumindest teilweise unterhalb der ersten Antriebsrolle 14 der ersten Riemenstation 13 verläuft.

In dem Bereich, in dem der Einlauftransporteur 1 sich der ersten Riemenstation 13 nähert und bis zu einem Bereich in dem der Einlauftransporteur 1 unter die zweite Riemenstation 18 läuft, ist auf der der ersten Riemenstation 13 abgewanden Seite des Einlauftransporteurs 1 ein Geländer 23 angeordnet. In der zweidimensional dargestellten Draufsicht befindet sich das Geländer 23 auf der linken Seite des Einlauftransporteurs 1 gesehen in der ersten Transportrichtung T1. Durch das Geländer 23 werden Flaschen 2-12, die mit der ersten Riemenstation 13 in Kontakt kommen, auf der anderen Seite mittels des Geländers 23 abgestützt werden, so dass diese Flaschen 2-12 nicht durch Wechselwirkung mit der ersten Riemenstation 13 verschoben und/oder umgekippt werden können. Das Geländer 23 erstreckt sich bis zu der zweiten Riemenstation 18, so dass auch bei Kontakt der Flaschen 2-12 mit der zweiten Riemenstation 18 diese Flaschen 2-12 nicht verschoben und/oder umgekippt werden können. Vorzugsweise ist das Geländer 23 so ausgebildet, dass es oberhalb des Seitenbereichs des Einlauftransporteurs 1 angeordnet ist, so dass die Flaschen 2-12 auf dem Einlauftransporteur 1 verbleiben und nicht in bzw. über den Seitenbereich des Einlauftransporteurs 1 gelangen können.

Der erste Riemen 17 und der zweite Riemen 22 weisen eine größere Geschwindigkeit auf als der Einlauftransporteur 1. Dadurch werden die Flaschen 2-12 vom Einlauftransporteur 1 zwischen die erste Riemenstation 13 und die zweite Riemenstation 18 gezogen und wickeln sich über den Radius der ersten Antriebsrolle 14 der ersten Riemenstation 13 ab, um dann von beiden Seiten durch den ersten Riemen 17 und den zweiten Riemen 22 reibschlüssig aufgenommen zu werden. Durch die im Vergleich zum Einlauftransporteur 1 größere Geschwindigkeit des ersten Riemens 17 und des zweiten Riemens 22 weisen die Flaschen 7-10 in dem Kanal 24 daher einen Abstand zueinander auf. Durch die reibschlüssige Aufnahme werden die Flaschen 7-10 durch den Kanal 24 in die zweite Transportrichtung T2 transportiert. Da der Transport in dem Kanal 24 bodenfrei erfolgt, kann beispielsweise eine Inspektion der reibschlüssig transportierten Flaschen 7-10 erfolgen.

In einem Anfangsbereich des Kanals 24 ist ein Überschubblech 25 vorgesehen, um zu verhindern, dass Flaschen 2-12, die noch nicht sowohl von dem ersten Riemen 17 wie auch dem zweiten Riemen 22 reibschlüssig aufgenommen wurden durchfallen. Das Überschubblech 25 kann so ausgeführt sein, dass bereits eine Inspektion oder eine Bodenabblasung der Flaschen 2-12 möglich ist.

In einem Endbereich des Kanals 24 ist ein Auslauftransporteur 26 angeordnet, der teilweise unterhalb der ersten Riemenstation 13 und der zweiten Riemenstation 18 verläuft und dazu ausgelegt ist, die Flaschen 2-12 nach Verlassen des Kanals 24 weiter in die zweite Transportrichtung T2 zu transportieren. Da die erste Riemenstation 13 und die zweite Riemenstation 18 versetzt zueinander angeordnet sind, ist im Anschluss der zweiten Riemenstation 18 ein weiteres Geländer 27 angeordnet. Auch dieses Geländer 27 ist vorzugsweise so ausgebildet, dass es oberhalb des Seitenbereichs des Auslauftransporteurs 26 angeordnet ist, so dass die Flaschen 11, 12 auf dem Auslauftransporteur 26 verbleiben und nicht in bzw. über den Seitenbereich des Auslauftransporteurs 26 gelangen können. In der zweidimensional dargestellten Draufsicht befindet sich das Geländer 27 auf der linken Seite des Auslauftrans-porteurs 26 gesehen in der zweiten Transportrichtung T2.

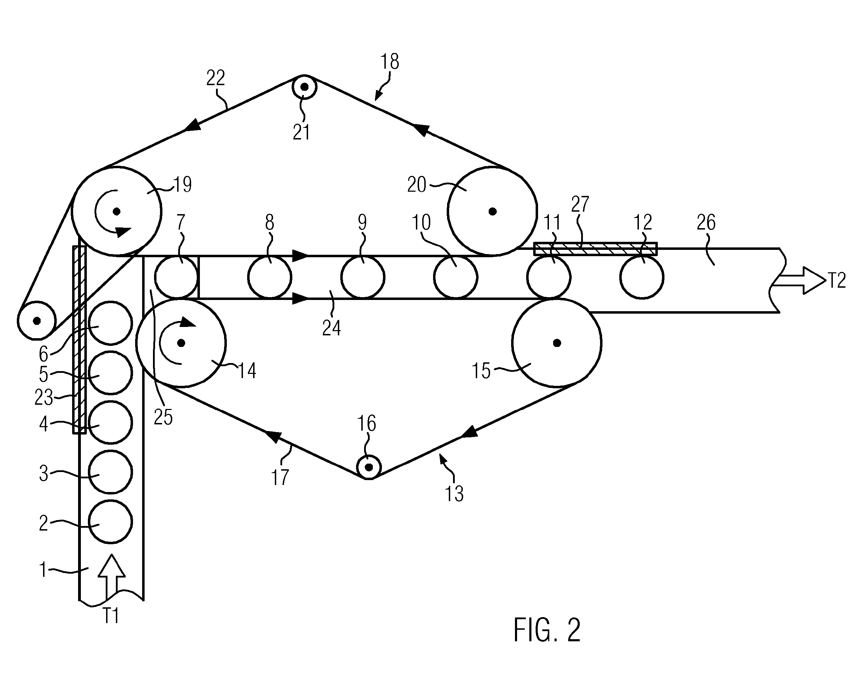

Figur 2 zeigt eine Draufsicht einer zweiten Ausführungsform einer Inspektionsmaschine, die im Wesentlichen so aufgebaut ist wie die in Figur 1 beschriebene erste Ausführungsform. In der zweiten Ausführungsform ist aber zusätzlich ein angetriebener, endloser Gummiriemen 28 angeordnet, wobei der Gummiriementeil, der in Kontakt mit den Flaschen 2-12 kommen kann, mit dem zweiten Riemen 22 der zweiten Riemenstation 18 in einem unbelasteten Zustand einen 45°-Winkel bildet.

Die Umlenkrolle 29 des Gummiriemens 28 ist außerhalb des Bereichs des Flaschenstroms angeordnet. Angetrieben wird der Gummiriemen 28 mittels der zweiten Antriebsrolle 19 der zweiten Riemenstation 18. Es kann auch vorgesehen sein, dass der Antrieb des Gummiriemens 28 unabhängig vom Antrieb der zweiten Riemenstation 18 ist. Durch die federnde Wirkung des Gummiriemens 28 werden die Flaschen 2-12, die von dem Einlauftransporteur 1 gegen den Gummiriemen 28 transportiert werden, gegen die erste Antriebsrolle 14 der ersten Riemenstation 13 gedrückt und so durch den ersten Riemen 17 der ersten Riemenstation 13 um den 90°-Winkel gezogen und gelangen in den Kanal 24.

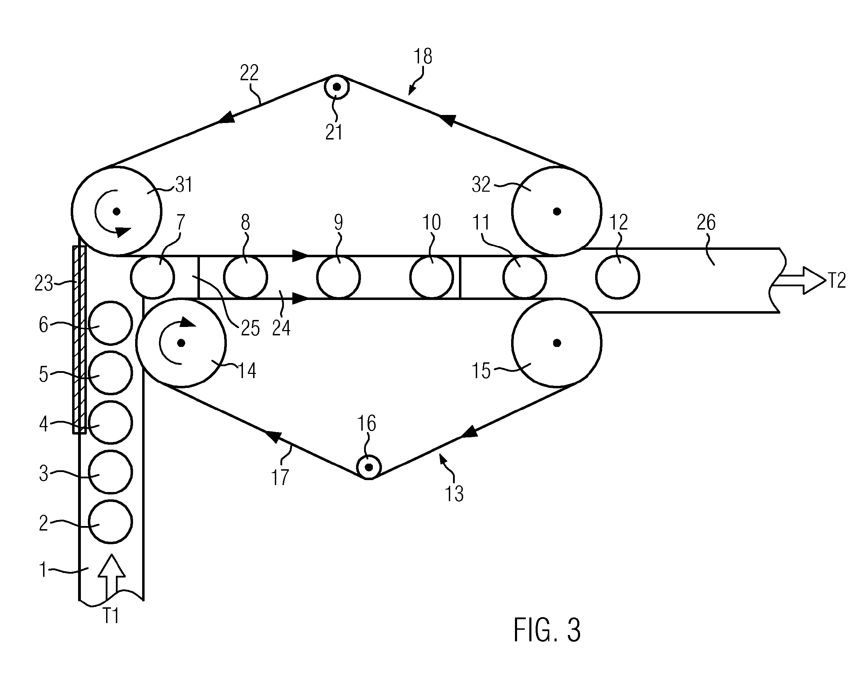

Figur 3 zeigt eine Draufsicht einer dritten Ausführungsform einer Inspektionsmaschine, wobei im Gegensatz zu der ersten Ausführungsform die zweite Riemenstation 30 länger als die erste Riemenstation 13 ausgeführt ist.

Die Inspektionsmaschine umfasst einen Einlauftransporteur 1, der die darauf befindlichen Flaschen 2-6 in die erste Transportrichtung T1 transportiert. Die Flaschen 2-6 weisen hierbei keine größeren Lücken in dem Flaschenstrom auf, und der Flaschenstrom ist zudem vorzugsweise druckfrei.

Für die Ausführung der Umlenkung sind eine erste Riemenstation 13, umfassend eine erste Antriebsrolle 14, eine erste Umlenkrolle 15, eine erste Führungsrolle 16 und einen ersten endlosen Riemen 17, und eine zweite Riemenstation 30, umfassend eine zweite Antriebsrolle 31, eine zweite Umlenkrolle 32, eine zweite Führungsrolle 33 und einen zweiten endlosen Riemen 34, in der Inspektionsmaschine vorgesehen.

Die erste Riemenstation 13 und die zweite Riemenstation 30 sind einander zumindest teilweise gegenüberliegend derart angeordnet sind, dass ein Kanal 35 durch die einander zumindest teilweise gegenüberliegend und beabstandet angeordneten ersten 17 und zweiten Riemen 34 ausgebildet ist. Der Abstand zwischen dem ersten Riemen 17 und dem zweiten Riemen 34 wird entsprechend der Geometrie der Flaschen 2-12 gewählt, so dass der erste Riemen 17 und der zweite Riemen 34 reibschlüssig an den Flaschen 2-12 angreifen und diese in die zweite Transportrichtung T2 transportieren können.

Die Länge des Riemenanteils des ersten Riemens 17 ist kürzer als die Länge des Riemenanteils des zweiten Riemens 34, wobei die beiden Riemenanteile parallel zu der zweiten Transportrichtung T2 sind und sich in die zweite Transportrichtung T2 bewegen, wenn der erste Riemen 17 von der ersten Antriebsrolle 14 angetrieben und der zweite Riemen 34 von der zweiten Antriebsrolle 31 angetrieben wird.

Durch die versetzte Anordnung der ersten Riemenstation 13 und der zweiten Riemenstation 30 werden die Flaschen 2-12 durch den Einlauftransporteur 1 an der ersten Antriebsrolle 14 der ersten Riemenstation 13 vorbeitransportiert und treffen im Bereich der zweiten Antriebsrolle 31 der zweiten Riemenstation 30 auf den Riemenanteil des zweiten Riemens 34, der parallel zu der zweiten Transportrichtung T2 ist. Der Einlauftransporteur 1, die erste Riemenstation 13 und die zweite Riemenstation 30 sind relativ zueinander so angeordnet, dass der Einlauftransporteur 1 sich zumindest bis unterhalb der zweiten Antriebsrolle 31 der zweiten Riemenstation 30 erstreckt und dass der Einlauftransporteur 1 zumindest teilweise unterhalb der ersten Antriebsrolle 14 der ersten Riemenstation 13 verläuft.

In dem Bereich, in dem der Einlauftransporteur 1 sich der ersten Riemenstation 13 nähert und bis zu einem Bereich in dem der Einlauftransporteur 1 unter die zweite Riemenstation 30 läuft, ist auf der der ersten Riemenstation 13 abgewanden Seite des Einlauftransporteurs 1 ein Geländer 23 angeordnet. In der zweidimensional dargestellten Draufsicht befindet sich das Geländer 23 auf der linken Seite des Einlauftransporteurs 1 gesehen in der ersten Transportrichtung T1. Durch das Geländer 23 werden Flaschen 2-12, die mit der ersten Riemenstation 13 in Kontakt kommen, auf der anderen Seite mittels des Geländers abgestützt werden, so dass diese Flaschen 2-12 nicht durch Wechselwirkung mit der ersten Riemenstation 13 verschoben und/oder umgekippt werden können. Das Geländer 23 erstreckt sich bis zu der zweiten Riemenstation 30, so dass auch bei Kontakt der Flaschen 2-12 mit der zweiten Riemenstation 30 diese Flaschen 2-12 nicht verschoben und/oder umgekippt werden können. Vorzugsweise ist das Geländer 23 so ausgebildet, dass es oberhalb des Seitenbereichs des Einlauftransporteurs 1 angeordnet ist, so dass die Flaschen 2-12 auf dem Einlauftransporteur 1 verbleiben und nicht in bzw. über den Seitenbereich des Einlauftransporteurs 1 gelangen können.

Der erste Riemen 17 und der zweite Riemen 34 weisen eine größere Geschwindigkeit auf als der Einlauftransporteur 1. Dadurch werden die Flaschen 2-12 vom Einlauftransporteur 1 zwischen die erste Riemenstation 13 und die zweite Riemenstation 30 gezogen und wickeln sich über den Radius der ersten Antriebsrolle 14 der ersten Riemenstation 13 ab, um dann von beiden Seiten durch den ersten Riemen 17 und den zweiten Riemen 34 reibschlüssig aufgenommen zu werden. Durch die im Vergleich zum Einlauftransporteur 1 größere Geschwindigkeit des ersten Riemens 17 und des zweiten Riemens 34 weisen die Flaschen 8-11 in dem Kanal 35 daher einen Abstand zueinander auf. Durch die reibschlüssige Aufnahme werden die Flaschen 8-11 durch den Kanal 35 in die zweite Transportrichtung T2 transportiert. Da der Transport in dem Kanal 35 bodenfrei erfolgt, kann beispielsweise eine Inspektion der reibschlüssig transportierten Flaschen 8-11 erfolgen.

In einem Anfangsbereich des Kanals 35 ist ein Überschubblech 25 vorgesehen, um zu verhindern, dass Flaschen 2-12, die noch nicht sowohl von dem ersten 17 wie auch dem zweiten Riemen 34 reibschlüssig aufgenommen wurden durchfallen. Das Überschubblech 25 kann so ausgeführt sein, dass bereits eine Inspektion oder eine Bodenabblasung der Flaschen 2-12 möglich ist.

In einem Endbereich des Kanals 35 ist ein Auslauftransporteur 26 angeordnet, der teilweise unterhalb der ersten Riemenstation 13 und der zweiten Riemenstation 30 verläuft und dazu ausgelegt ist, die Flaschen 2-12 nach Verlassen des Kanals 35 weiter in die zweite Transportrichtung T2 zu transportieren. Die erste Riemenstation 13 und die zweite Riemenstation 30 versetzt zueinander derart angeordnet, dass sie in der zweiten Transportrichtung T2 einander gegenüberliegend enden.

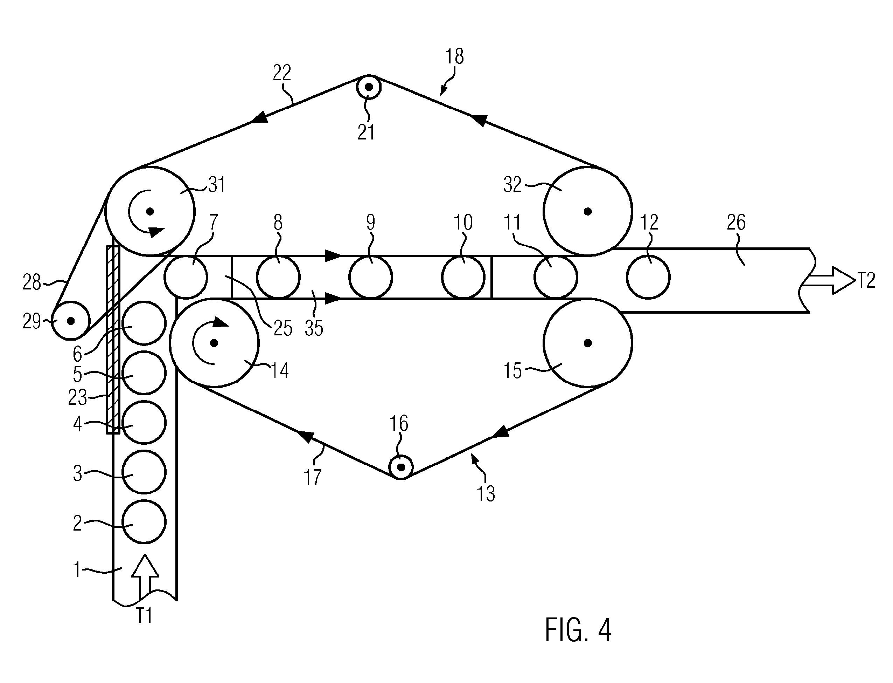

Figur 4 zeigt eine Draufsicht einer vierten Ausführungsform einer Inspektionsmaschine, die im Wesentlichen so aufgebaut ist wie die in Figur 3 beschriebene dritte Ausführungsform. In der vierten Ausführungsform ist aber zusätzlich ein angetriebener, endloser Gummiriemen 28 angeordnet, wobei der Gummiriementeil, der in Kontakt mit den Flaschen 2-12 kommen kann, mit dem zweiten Riemen 34 der zweiten Riemenstation 30 in einem unbelasteten Zustand einen 45°-Winkel bildet.

Die Umlenkrolle 29 des Gummiriemens 28 ist außerhalb des Flaschenstroms angeordnet. Angetrieben wird der Gummiriemen 28 mittels der zweiten Antriebsrolle 31 der zweiten Riemenstation 30. Es kann auch vorgesehen sein, dass der Antrieb des Gummiriemens 28 unabhängig vom Antrieb der zweiten Riemenstation 30 ist. Durch die federnde Wirkung des Gummiriemens 28 werden die Flaschen 2-12, die von dem Einlauftransporteur 1 gegen den Gummiriemen 28 transportiert werden, gegen die erste Antriebsrolle 14 der ersten Riemenstation 13 gedrückt und so durch den ersten Riemen 17 der ersten Riemenstation 13 um den 90°-Winkel gezogen und gelangen in den Kanal 35.

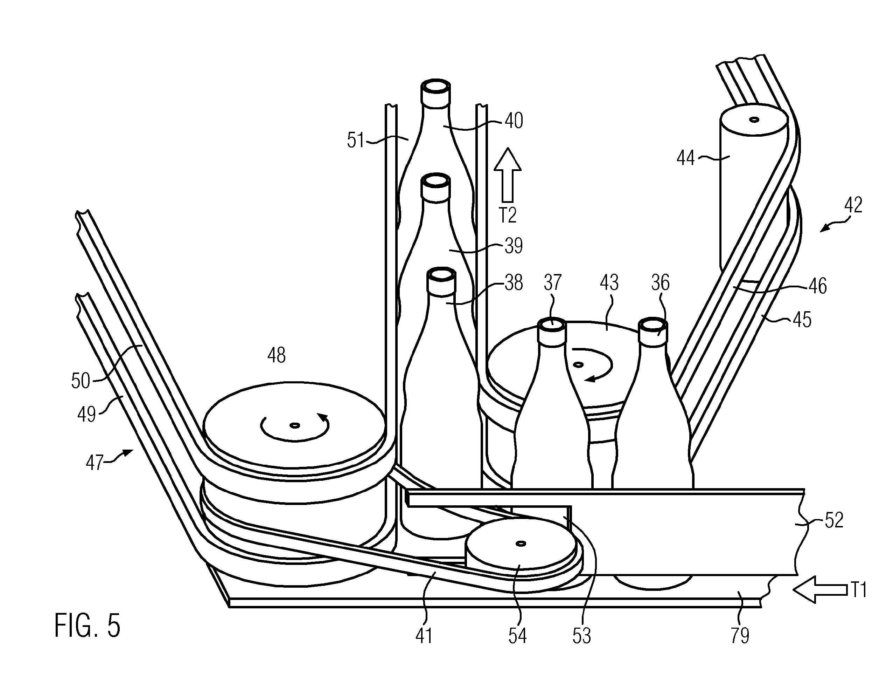

Figur 5 zeigt eine Seitenansicht einer Inspektionsmaschine, wobei die Inspektionsmaschine einen Gummiriemen 41 aufweist, so dass durch die federnde Wirkung des Gummiriemens 41 Flaschen 36-40, die von dem Einlauftransporteur 79 gegen den Gummiriemen 41 transportiert werden, gegen die erste Antriebsrolle 43 der ersten Riemenstation 42 gedrückt und so durch die beiden Riemen 45, 46 der ersten Riemenstation 42 um den 90°-Winkel gezogen werden und in den Kanal 51 gelangen. Der Gummiriemen 41 wird mittels der zweiten Antriebsrolle 48 der zweiten Riemenstation 47 angetrieben und läuft zudem über eine Umlenkrolle 54.

Die erste Riemenstation 42 und die zweite Riemenstation 47 umfassen jeweils zwei endlose Riemen 45, 46; 49, 50, und dadurch, dass die erste Riemenstation 42 und die zweite Riemenstation 47 einander zumindest teilweise gegenüberliegend angeordnet sind, wird ein Kanal 51 durch die einander zumindest teilweise gegenüberliegend und beabstandet angeordneten Riemen 45, 46; 49, 50 der ersten Riemenstation 42 und der zweiten Riemenstation 47 ausgebildet. Die beiden Riemen 45, 46 der ersten Riemenstation 42 werden mittels der ersten Antriebsrolle 43 angetrieben und verlaufen über die erste Führungsrolle 44, und die beiden Riemen 49, 50 der zweiten Riemenstation 47 werden mittels der zweiten Antriebesrolle 48 angetrieben. Im Falle der ersten Riemenstation 42 ist die Umlenkrolle nicht dargestellt, und im Falle der zweiten Riemenstation 47 sind die Führungsrolle und die Umlenkrolle nicht dargestellt.

Das Geländer 52, das in dem Bereich angeordnet ist, in dem sich der Einlauftransporteur 79 der ersten Riemenstation 42 nähert und bis hin zu einem Bereich in dem der Einlauftransporteur 79 unter die zweite Riemenstation 47 läuft, weist eine Aussparung 53 auf. Die Aussparung 53 ist so angeordnet, dass der Gummiriemen 41 betrieben werden kann, ohne mit Teilen des Geländers 52 in Kontakt zu kommen. Die Aussparung 53 ermöglicht somit einen Betrieb des Gummiriemens 41, wobei zudem Flaschen 36-40, die mit der ersten Riemenstation 42 in Kontakt kommen, auf der anderen Seite mittels des Geländers 52 abgestützt werden und nicht verschoben und/oder umgekippt werden können.

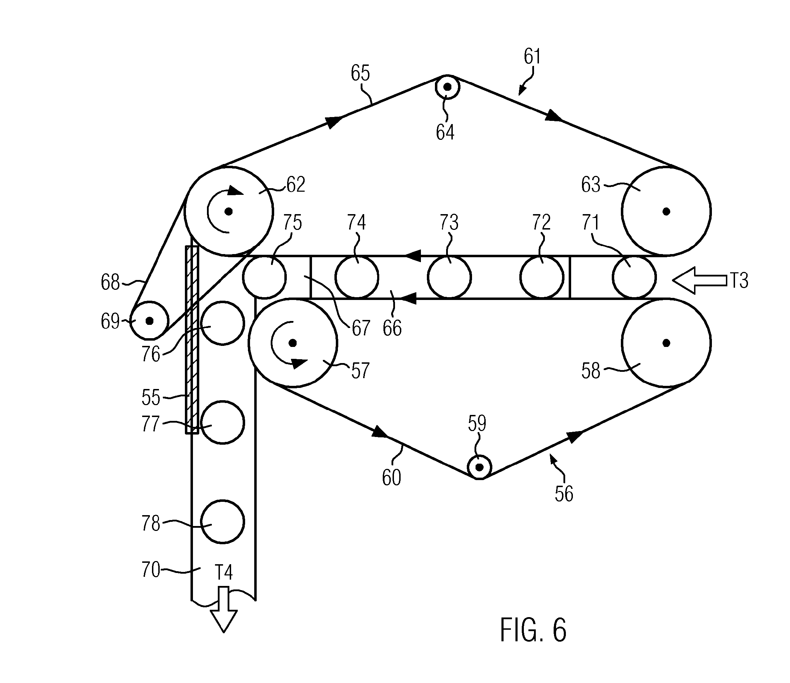

Figur 6 zeigt eine Draufsicht einer fünften Ausführungsform einer Inspektionsmaschine. In der zweidimensional dargestellten Draufsicht, weist die erste Transportrichtung T3 nach links und die zweite Transportrichtung T4 nach hinten. Somit wird eine Umlenkung der Flaschen 71-78 durch die Inspektionsmaschine um 90° ermöglicht.

Die Flaschen 71-74 werden in einem Kanal 66 transportiert, der durch die einander zumindest teilweise gegenüberliegend und beabstandet angeordneten ersten 60 und zweiten Riemen 65 der ersten Riemenstation 56 bzw. der zweiten Riemenstation 61 ausgebildet ist. Der Abstand zwischen dem ersten Riemen 60 und dem zweiten Riemen 65 ist entsprechend der Geometrie der Flaschen 71-78, so dass der erste Riemen 60 und der zweite Riemen 65 reibschlüssig an den Flaschen 71-78 angreifen und diese in die erste Transportrichtung T3 transportieren können.

Die erste Riemenstation 56 umfasst zudem eine erste Antriebsrolle 57, eine erste Umlenkrolle 58 und eine erste Führungsrolle 59, und die zweite Riemenstation 61 umfasst zudem eine zweite Antriebsrolle 62, eine zweite Umlenkrolle 63 und eine zweite Führungsrolle 64.

Die Länge des Riemenanteils des ersten Riemens 60, der parallel zu der ersten Transportrichtung T3 ist und sich in die erste Transportrichtung T3 bewegt, wenn der erste Riemen 60 von der ersten Antriebsrolle 57 angetrieben wird, ist kürzer als die Länge des Riemenanteils des zweiten Riemens 65, der parallel zu der ersten Transportrichtung T3 ist und sich in die erste Transportrichtung T3 bewegt, wenn der zweite Riemen 65 von der zweiten Antriebsrolle 62 angetrieben wird.

Am Anfang des Kanals 66 sind die erste Riemenstation 56 und die zweite Riemenstation 61 einander gegenüberliegend angeordnet. Durch die kürzere Länge des Riemenanteils des ersten Riemens 60 im Vergleich zu der Länge des Riemenanteils des zweiten Riemens 65, erstreckt sich der zweite Riemen 65 weiter in die erste Transportrichtung T3 als der erste Riemen 60.

In einem Endbereich des Kanals 66 ist ein Überschubblech 67 vorgesehen, um zu verhindern, dass Flaschen 71-78, die nicht mehr sowohl von dem ersten Riemen 60 wie auch dem zweiten Riemen 65 reibschlüssig aufgenommen wurden durchfallen. Das Überschubblech 67 kann so ausgeführt sein, dass noch eine Inspektion oder eine Bodenabblasung der Flaschen 71-78 möglich ist.

Nach Verlassen des Kanals 66 gelangen die Flaschen 71-78 auf einen Auslauftransporteur 70, der dazu ausgelegt ist, die Flaschen 71-78 in die zweite Transportrichtung T4 zu transportieren.

An der zweiten Antriebsrolle 62 der zweiten Riemenstation 61 ist ein endloser Gummiriemen 68 angeordnet, der zudem über eine Umlenkrolle 69 läuft und mit dem zweiten Riemen 65 der zweiten Riemenstation 61 in einem unbelasteten Zustand, d.h. ohne Kontakt zu einer Flasche 71-78, einen Winkel von 45° bildet. Die Umlenkrolle 69 des Gummiriemens 68 ist außerhalb des Bereichs der Flaschen, die transportiert werden, angeordnet. Angetrieben wird der Gummiriemen 68 mittels der zweiten Antriebsrolle 62 der zweiten Riemenstation 61.

Durch die federnde Wirkung des Gummiriemens 68 werden die Flaschen 71-78, die von dem Kanal 66 kommend gegen den Gummiriemen 68 transportiert werden, gegen die erste Antriebsrolle 57 der ersten Riemenstation 56 gedrückt und so durch den ersten Riemen 60 der ersten Riemenstation 56 um den 90°-Winkel transportiert und gelangen auf den Auslauftransporteur 70, der die Flaschen 71-78 in die zweite Transportrichtung T4 transportiert.

Ein Geländer 55 ist im Übergangsbereich von Kanal 66, Auslauftransporteur 70 und Gummiriemen 68 vorgesehen. Dieses Geländer 55 kann verhindern, dass Flaschen 71-78 verschoben und/oder umgekippt werden können, wenn sie von dem Kanal 66 auf den Auslauftrans-porteur 70 gelangen.

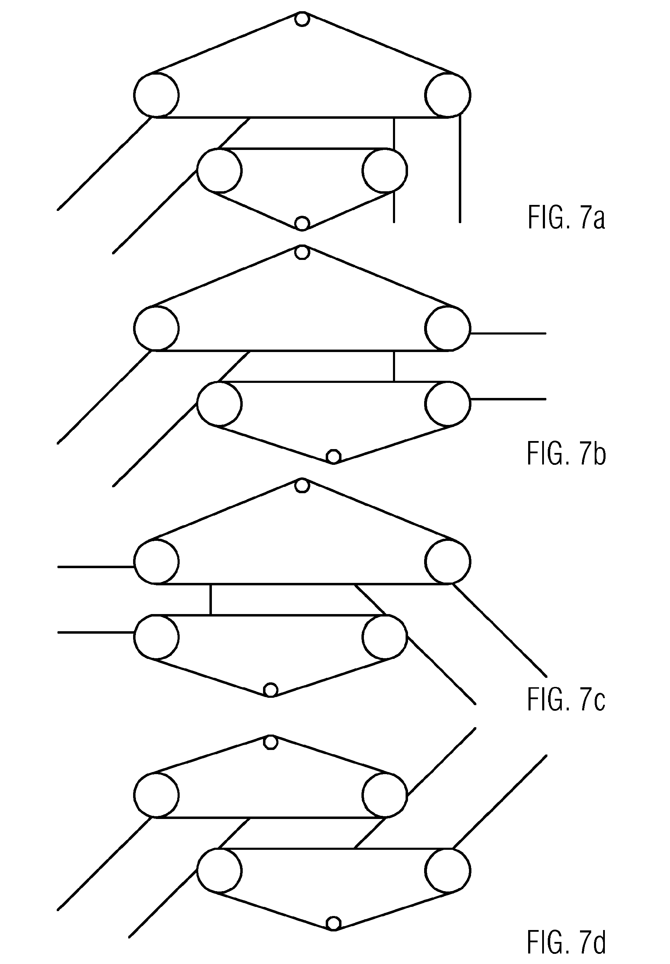

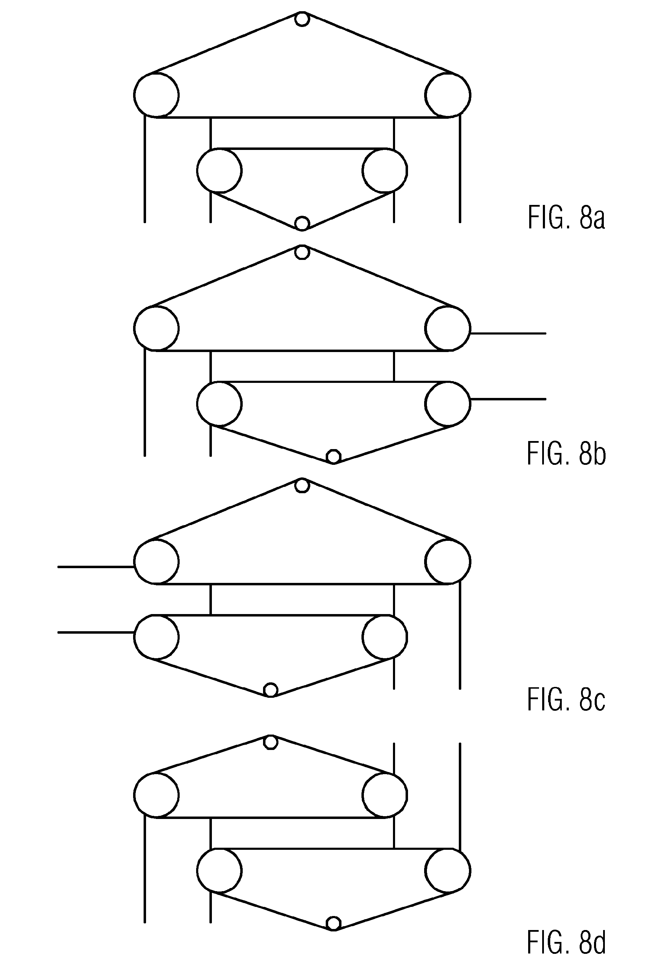

Die in den Figuren 7a-7d und Figuren 8a-8d schematisch dargestellten Inspektionsmaschinen können optional zusätzlich mit Gummiriemen versehen werden, die beispielsweise über entsprechende Antriebsrollen der Riemenstationen angetrieben werden. Im Folgenden wird die Riemenstation mit der kürzeren Länge eines Riemenanteils des Riemens, der parallel zu der zweiten Transportrichtung ausgerichtet und dazu ausgelegt ist, sich in die zweite Transportrichtung zu bewegen, wenn dieser Riemen von der Antriebsrolle dieser Riemenstation angetrieben wird, als kurze Riemenstation bezeichnet, und die Riemenstation mit der längeren Länge eines Riemenanteils des Riemens, der parallel zu der zweiten Transportrichtung ausgerichtet und dazu ausgelegt ist, sich in die zweite Transportrichtung zu bewegen, wenn dieser Riemen von der Antriebsrolle dieser Riemenstation angetrieben wird, wird als lange Riemenstation bezeichnet.

Figur 7a zeigt schematisch eine Draufsicht auf eine Inspektionsmaschine mit einer langen und einer kurzen Riemenstation, wobei die kurze Riemenstation so gegenüberliegend der langen Riemenstation angeordnet ist, dass eine Umlenkung um 45° vor/nach dem Kanal und eine Umlenkung um 90° nach/vor dem Kanal möglich ist. Figur 8a zeigt dieselbe Anordnung der beiden Riemenstationen wie Figur 7a, wobei aber jeweils eine Umlenkung um 90° vorgesehen ist.

Die in Figur 7b gezeigte Inspektionsmaschine weist auch eine lange und eine kurze Riemenstation auf, die jedoch so angeordnet sind, dass nur vor/nach dem Kanal eine Umlenkung, hier um 45°, möglich ist, wohingegen nach/vor dem Kanal keine Umlenkung möglich ist. Figur 8b zeigt dieselbe Anordnung der beiden Riemenstationen wie Figur 7b, wobei statt der Umlenkung um 45° eine Umlenkung um 90° vorgesehen ist.

Die in Figur 7c gezeigte Inspektionsmaschine weist eine lange und eine kurze Riemenstation auf, die so angeordnet sind, dass vor/nach dem Kanal keine Umlenkung und nach/vor dem Kanal eine Umlenkung um 45° möglich ist. Figur 8c zeigt dieselbe Anordnung der beiden Riemenstationen wie Figur 7c, wobei statt der Umlenkung um 45° eine Umlenkung um 90° vorgesehen ist.

Die Inspektionsmaschine, die in Figur 7d dargestellt ist, umfasst zwei gleich lange Riemenstationen, die so versetzt angeordnet sind, dass vor/nach dem Kanal eine Umlenkung um 45° und nach/vor dem Kanal eine Umlenkung um 45° möglich ist. Figur 8d zeigt dieselbe Anordnung der beiden Riemenstationen wie Figur 7d, wobei statt der Umlenkungen um 45° jeweils Umlenkungen um 90° vorgesehen sind.

## Patentansprüche

1. Eine Inspektionsmaschine umfassend:
- einen linearen Riemenförderer, der eine erste Riemenstation (13, 42) und eine zweite Riemenstation (18, 30, 47) umfasst, zum bodenfreien Transport von Behältern (2-12, 36-40), wie etwa Flaschen, Dosen, Gläser mit oder ohne Schraubverschluss, in einem Kanal (24, 35, 51), der zwischen der ersten Riemenstation (13, 42) und der zweiten Riemenstation (18, 30, 47) ausgebildet ist und vorzugsweise geradlinig verläuft, **dadurch gekennzeichnet, dass** ein Einlauf in den linearen Riemenförderer als Umlenkeinheit ausgebildet ist, um die Behälter (2-12, 36-40) aus einer ersten Transportrichtung (T1) in eine zweite Transportrichtung (T2) umzulenken.

2. Die Inspektionsmaschine nach Anspruch 1, wobei die Inspektionsmaschine weiter eine dem linearen Riemenförderer nachfolgende Seitenwandinspektionsvorrichtung umfasst.

3. Die Inspektionsmaschine nach Anspruch 1 oder 2, wobei die Inspektionsmaschine weiter eine dem linearen Riemenförderer vorgeschaltete Sortiervorrichtung zum Erkennen und Ausscheiden von Behältern, die von einer vorgegebenen Spezifikation abweichen, umfasst.

4. Die Inspektionsmaschine nach einem der Ansprüche 1 bis 3, wobei die Inspektionsmaschine weiter einen ersten Transporteur (1, 79) umfasst, der dazu ausgelegt ist, die Behälter (2-12, 36-40) mit einer Transportgeschwindigkeit in die erste Transportrichtung (T1) zu transportieren.

5. Die Inspektionsmaschine nach einem der Ansprüche 1 bis 4, wobei zwischen der ersten Transportrichtung (T1) und der zweiten Transportrichtung (T2) ein Winkel zwischen 20° bis 90° besteht.

6. Die Inspektionsmaschine nach einem der Ansprüche 1 bis 5, wobei die Inspektionsmaschine weiter umfasst:
- einen Gummiriemen (28, 41), der dazu ausgelegt ist, durch eine federnde Wirkung des Gummiriemens (28, 41) die Behälter (2-12, 36-40), die gegen den Gummiriemen (28, 41) transportiert werden, gegen eine erste Antriebsrolle (14, 43) der ersten Riemenstation (13, 42) zu drücken und so reibschlüssig mittels eines ersten Riemens (17, 45, 46) der ersten Riemenstation (13, 42) und des Gummiriemens (28, 41) in den Kanal (24, 35, 51) oder aus dem Kanal (24, 35, 51) zu transportieren, wobei der Gummiriemen (28, 41) in einem Winkel von 30° bis 60° zu der zweiten Transportrichtung (T2) an einer zweiten Antriebsrolle (19, 31, 48) der zweiten Riemenstation (18, 30, 47) angeordnet ist.

7. Die Inspektionsmaschine nach Anspruch 6, wobei die zweite Antriebsrolle (19, 31, 48) weiter dazu ausgelegt ist, den Gummiriemen (28, 41) anzutreiben.

8. Die Inspektionsmaschine nach Anspruch 6, wobei die Inspektionsmaschine weiter umfasst:
- einen Antrieb, der dazu ausgelegt ist, den Gummiriemen anzutreiben.

9. Die Inspektionsmaschine nach einem der Ansprüche 4 bis 8, weiter umfassend einen zweiten Transporteur (26), der in der zweiten Transportrichtung (T2) angeordnet ist und der dazu ausgelegt ist, die Behälter (2-12, 36-40) in die zweite Transportrichtung (T2) von dem Kanal (24, 35, 51) weg oder zu dem Kanal (24, 35, 51) hin zu transportieren.

10. Die Inspektionsmaschine nach einem der Ansprüche 4 bis 9, weiter umfassend ein Überschubblech (25), das in der zweiten Transportrichtung (T2) zwischen dem ersten Transporteur (1, 79) und dem Kanal (24, 35, 51) angeordnet ist.

11. Die Inspektionsmaschine nach einem der Ansprüche 1 bis 10, wobei eine erste Länge eines ersten Riemenanteils des ersten Riemens (17, 45, 46) der ersten Riemenstation (13, 42), der parallel zu der zweiten Transportrichtung (T2) ausgerichtet und dazu ausgelegt ist, sich in die zweite Transportrichtung (T2) zu bewegen, wenn der erste Riemen (17, 45, 46) von einer ersten Antriebsrolle (14, 43) der ersten Riemenstation (13, 42) angetrieben wird, gleich lang ist wie eine zweite Länge eines zweiten Riemenanteils eines zweiten Riemens (22, 34, 49, 50) der zweiten Riemenstation (18, 30, 47), der parallel zu der zweiten Transportrichtung (T2) ausgerichtet und dazu ausgelegt ist, sich in die zweite Transportrichtung (T2) zu bewegen, wenn der zweite Riemen (22, 34, 49, 50) von einer zweiten Antriebsrolle (19, 31, 48) der zweiten Riemenstation (18, 30, 47) angetrieben wird.

12. Die Inspektionsmaschine nach einem der Ansprüche 1 bis 10, wobei eine erste Länge eines ersten Riemenanteils des ersten Riemens (17, 45, 46) der ersten Riemenstation (13, 42), der parallel zu der zweiten Transportrichtung (T2) ausgerichtet und dazu ausgelegt ist, sich in die zweite Transportrichtung (T2) zu bewegen, wenn der erste Riemen (17, 45, 46) von einer ersten Antriebsrolle (14, 43) der ersten Riemenstation (13, 42) angetrieben wird, kürzer ist wie eine zweite Länge eines zweiten Riemenanteils eines zweiten Riemens (22, 34, 49, 50) der zweiten Riemenstation (18, 30, 47), der parallel zu der zweiten Transportrichtung (T2) ausgerichtet und dazu ausgelegt ist, sich in die zweite Transportrichtung (T2) zu bewegen, wenn der zweite Riemen (22, 34, 49, 50) von einer zweiten Antriebsrolle (19, 31, 48) der zweiten Riemenstation (18, 30, 47) angetrieben wird.

13. Die Inspektionsmaschine nach Anspruch 12, wobei die erste Länge und die zweite Länge so bemessen sind, dass die erste Riemenstation (13, 42) und die zweite Riemenstation (18, 30, 47) an einem Ende einander gegenüber liegend enden.

14. Die Inspektionsmaschine nach einem der Ansprüche 4 bis 13, wobei die Inspektionsmaschine weiter ein Geländer (23, 52) umfasst, das dazu ausgelegt ist, die Behälter (2-12, 36-40) auf dem ersten Transporteur (1, 79) zu halten, wenn die Behälter (2-12, 36-40) in Kontakt mit der ersten Riemenstation (13, 42) und/oder der zweiten Riemenstation (18, 30, 47) kommen.

15. Die Inspektionsmaschine nach einem der Ansprüche 9 bis 14, wobei die Inspektionsmaschine weiter ein Geländer (27) umfasst, das dazu ausgelegt ist, die Behälter (2-12, 36-40) auf dem zweiten Transporteur (26) zu halten, wenn die Behälter (2-12, 36-40) Kontakt mit der ersten Riemenstation (13, 42) und/oder der zweiten Riemenstation (18, 30, 47) verlassen.

16. Die Inspektionsmaschine nach einem der Ansprüche 1 bis 15, wobei die erste Riemenstation (13, 42) und/oder die zweite Riemenstation (18, 30, 47) mehr als einen Riemen (17, 45, 46; 22, 34, 49, 50) umfasst.

17. Verfahren zum Umlenken von Behältern, wie etwa Flaschen, Dosen, Gläser mit oder ohne Schraubverschluss, vorzugsweise eines Behälterstroms, aus einer ersten Transportrichtung (T1) in eine zweite Transportrichtung (T2) unter Verwendung einer Inspektionsmaschine nach einem der Ansprüche 1 bis 16.
